# EUROPEAN PATENT APPLICATION

(11) **EP 3 591 560 A1**
(43) Date of publication of application: **08.01.2020**
(21) Application number: 18181616.6
(22) Date of filing: 04.07.2018
(51) Int. Cl.: G06F 21/62, G06F 21/40

(54) **METHOD FOR MANAGING DATA OF A VEHICLE USER, ELECTRONIC CONTROL MODULE AND STORAGE MEDIUM**

(71) Applicant: Continental Teves AG & Co. OHG, 60488 Frankfurt am Main (DE)
(72) Inventor: Sabouri, Ahmad, 63303 Dreiech-Sprendlingen (DE); Ugus, Osman, 82140 Olching (DE)

(57) **Abstract**

The invention relates to a method for managing data of a vehicle user, wherein data is stored in a secure storage and can only be accessed after receiving two specific keys. The invention relates further to a corresponding electronic control module and to a corresponding computer readable medium.

## Description

The invention relates to a method for managing data of a vehicle user, to a corresponding electronic control module and to a corresponding computer readable medium.

Protection of end-user data is not only important in typical computer-based data processing, but becomes more and more important in technical equipment like vehicles, as such devices have a constantly increasing number of data collecting entities, which can, for example, store information about driving history of a user.

Existing mechanisms to protect such data require the end user to rely on the trustworthiness of the vendor or the provider to stick to any predefined agreement. There is no technical measure enabling users to prevent illegitimate processing of their personal data. Moreover, in the case of security breaches of the vendor, user's personal data are exposed to outsiders.

It is thus an object of the invention to provide a method for improved managing of data of a vehicle user. It is a further object of the invention to provide a corresponding electronic control module and to provide a corresponding computer readable medium.

This is achieved by a method according to claim 1, an electronic control module according to claim 11, and a non-volatile computer readable medium according to claim 12. Preferred embodiments can, for example, be derived from the respective dependent claims. The subject-matter of the claims is made a subject-matter of the application by explicit reference.

The invention relates to a method for managing data of a vehicle user. The method comprises:
- storing the data in a secure storage, and
- releasing the data from the secure storage only after
   - receiving a first key,
   - receiving a second key, and
   - checking that the first key and the second key form a valid set of keys for accessing the data.

With the inventive method, data is stored securely in a secure storage, and can only be accessed when a first key and a second key are received and form a valid set of keys. This allows a definite control of access to the data by defining valid sets of keys, wherein each such set comprises two predefined keys. Suitable, non-limiting implementations are given below.

According to an implementation, one valid set of keys is defined by the first key being an OEM key and the second key being an authority key. This allows an authority, for example a law enforcement authority, to access the data with cooperation of the OEM (Original Equipment Manufacturer). This provides for a possibility that data is given to law enforcement authorities even against the will of the user.

According to an implementation, one valid set of keys is defined by the first key being an OEM key and the second key being a user key. This allows the user himself to access his own data with cooperation of the OEM. The user can also allow the OEM to access the data, for example for maintenance or development purposes, by providing his user key.

According to an implementation, one valid set of keys is defined by the first key being a user key and the second key being a user key. Thus, the user can access his data at any time, even without cooperation of the OEM. The two mentioned user keys may especially be different from each other.

It should explicitly be noted that the disclosed implementations can be combined arbitrarily, and can be combined with other implementations. However, also other implementations are possible.

According to an implementation, the OEM key is a key held by an Original Equipment Manufacturer. According to an implementation, the authority key is a key held by a law enforcement authority. According to an implementation, the user key is a key held by the vehicle user. Such implementations allow suitable assignments of keys that can be used for accessing user data. Each entity can, for example, store its keys in a storage medium.

According to an implementation, the secure storage is a data storage implemented in a vehicle. This allows a preferred application of the method for accessing data that are stored directly in electronic components of a vehicle.

According to an implementation, the secure storage is a data storage implemented in a vehicle diagnosis equipment. This allows the method to protect data that is read out from a vehicle by a diagnosis equipment, which can, for example, be found in typical workshops that provide maintenance and repair of vehicles.

According to an implementation, the secure storage is a data storage implemented in a cloud service device. This can, for example, be an Internet server suitable for managing vehicle user data. For example, a vehicle can upload its data to the cloud service device, from where it can be accessed by the inventive method.

Typically, the data cannot be accessed otherwise than by the measures described herein.

The invention relates further to an electronic control module or a programmable device comprising or being connected to a secure storage and being configured to perform a method according to the invention. With regard to the method, all embodiments and variations as disclosed herein can be applied. The electronic control module or programmable device can especially be implemented in a vehicle and can perform certain control tasks.

The invention relates further to a non-volatile computer readable medium comprising program code that causes, when executed, a processor to perform a method according to the invention. With regard to the method, all embodiments and variations as disclosed herein can be applied.

The invention relates further to a vehicle comprising an inventive electronic control module or an inventive programmable device.

Further details and advantages will be apparent from the embodiment which is described in the following with reference to the accompanying drawing.
- Fig. 1: shows a key generation scheme, and
- fig. 2: shows a system with an electronic control module implementing the inventive method.

According to current regulations, for example European general data protection regulations, accessing personal data is allowed only when the data subject has provided consent or is justified due to some laws. For instance, in criminal cases or accident post-investigations, authorities shall be able to obtain some subset of the data such as driving history. Those data are nowadays protected by secret keys that are known to the OEMs or the suppliers. The data protection shortcoming is that OEMs or the suppliers are able to access those private data without explicit consent of the vehicle owners or permission by the authorities. In order to implement privacy by design paradigm, secret sharing schemes can be applied to address the issue.

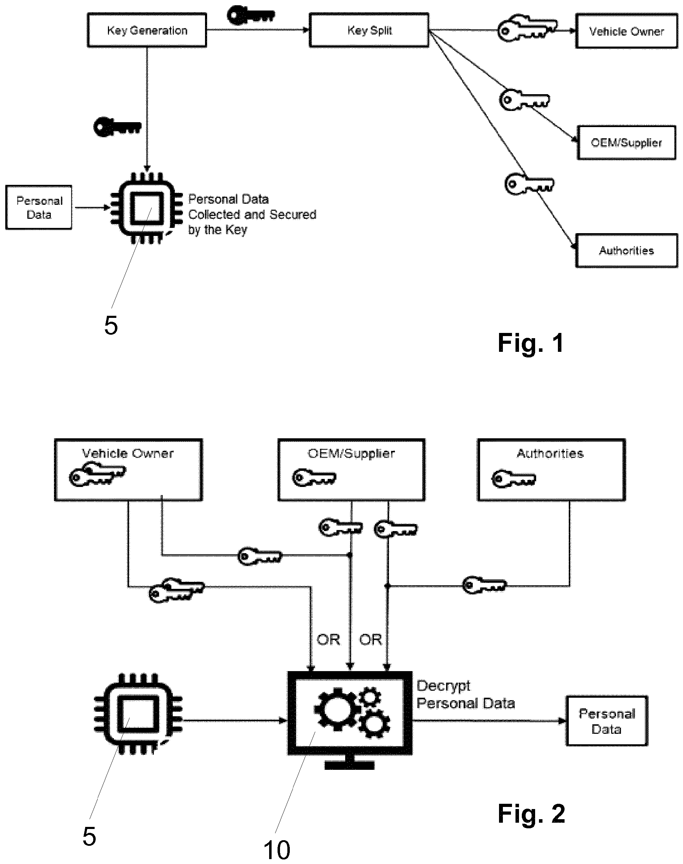

Fig. 1 shows a secure storage 5 for personal data of a vehicle user and a corresponding key generation scheme to access the data. In a K of N threshold secret sharing scheme, at least a subset of size K of N existing keys must be present in order to enable access to the protected data. More explicitly, there is considered a two of four secret sharing method. Access to the private data is protected by secret values shared as follows:
- one key is known to the OEM (or supplier),
- one key is known to the authorities,
- two keys are known to the vehicle owner.

Such keys are generated by a key generation scheme shown in fig. 1, wherein the keys are split in such keys that can be distributed to an OEM, to authorities and to a vehicle owner.

Fig. 2 shows the secure storage 5 together with an electronic control module 10 implementing an inventive method. There are shown three suitable sets of keys which can each be used to access the data stored in secure storage 5. Explicitly, when two keys are received by the electronic control module 10, it checks if those two keys are valid keys of any one of the three sets.

This prevents an OEM to retrieve those private data on his own. In the provided scenario, the following combinations enable access to the data:
- User: The user knows two keys that according to the scheme are able to access his own data without involving any other party.
- OEM + user: For the OEM to get access to the private data, the explicit consent of the vehicle owner is necessary. The user can provide his explicit consent by involving one of his secret keys.
- OEM + authorities: In the regulated cases where legitimacy of access is given by an authority, the combination of the keys from the OEM and the authority enables retrieval of the protected data.

The shown implementation provides a technical solution rather than contractual measures to enforce regulations, which boosts end-user's trust in the protection of the personal data.

It shall be noted that the inventive method can be used in any vehicle or part of a vehicle which collects personal and/or sensitive data.

The claims comprised by this application do not constitute an abdication of a broader scope of protection.

If it becomes apparent during the proceedings that a feature or item or a group of features or items is not absolutely necessary, the applicant intends already at time of filing a formulation not comprising the feature or item or the group of features or items. This can, for example, be a subcombination of a claim filed on the filing date, or a subcombination of a claim filed on the filing date being further restricted by further features or items. Claims or feature combinations being formulated in that way are to be understood as being comprised by the disclosure of this application.

It is further to be understood that arrangements, features and variants of the invention, that are described in the various implementations and embodiments and/or that are shown in the figures, can be combined arbitrarily among each other. Features, both alone and in combination, can be exchanged arbitrarily against each other. Feature combinations resulting therefrom are to be understood as being comprised by the disclosure of this application.

References in dependent claims are not to be understood as an abdication of a separate protection for the features of the dependent claims. These features can also be combined arbitrarily with other features.

Features or items that are only disclosed in the description or features or items that are disclosed in the description or in a claim only in connection with other features can generally be of separate inventive significance. Thus, they can also be incorporated in claims separately in order to distinguish against prior art.

## Claims

1. Method for managing data of a vehicle user, the method comprising:
- storing the data in a secure storage (5), and
- releasing the data from the secure storage (5) only after
- receiving a first key,
- receiving a second key, and
- checking that the first key and the second key form a valid set of keys for accessing the data.

2. Method according to claim 1,
- wherein one valid set of keys is defined by the first key being an OEM key and the second key being an authority key.

3. Method according to one of the preceding claims,
- wherein one valid set of keys is defined by the first key being an OEM key and the second key being a user key.

4. Method according to one of the preceding claims,
- wherein one valid set of keys is defined by the first key being a user key and the second key being a user key.

5. Method according to claim 2 or claim 3 or a claim dependent therefrom,
- wherein the OEM key is a key held by an original equipment manufacturer.

6. Method according to claim 2 or a claim dependent therefrom,
- wherein the authority key is a key held by a law enforcement authority.

7. Method according to claim 3 or claim 4 or a claim dependent therefrom,
- wherein the user key is a key held be the vehicle user.

8. Method according to one of the preceding claims,
- wherein the secure storage is a data storage implemented in a vehicle.

9. Method according to one of claims 1 to 7,
- wherein the secure storage (5) is a data storage implemented in a vehicle diagnosis equipment.

10. Method according to one of claims 1 to 7,
- wherein the secure storage (5) is a data storage implemented in a cloud service device.

11. Electronic control module (10) or programmable device comprising or being connected to a secure storage (5) and being configured to perform a method according to one of the preceding claims.

12. Non-volatile computer readable medium comprising program code that causes, when executed, a processor to perform a method according to one of claims 1 to 10.
